# EUROPEAN PATENT SPECIFICATION

(11) **EP 2 948 634 B1**
(45) Date of publication and mention of the grant of the patent: **25.08.2021**
(21) Application number: 13872487.7
(22) Date of filing: 24.01.2013
(51) Int. Cl.: F01D 5/18, F01D 5/14

(54) **GAS TURBINE ENGINE COMPONENT WITH ANGLED APERTURE IMPINGEMENT**
GASTURBINENMOTORKOMPONENTE MIT PRALLKÜHLUNG MITTELS EINER ABGEWINKELTEN ÖFFNUNG
COMPOSANT DE TURBINE À REFROIDISSEMENT PAR IMPACT SUR OUVERTURE ANGULAIRE

(43) Date of publication of application: 02.12.2015
(73) Proprietor: Raytheon Technologies Corporation, Farmington, CT 06032 (US)
(72) Inventor: QUACH, San, East Hartford, Connecticut 06108 (US); SLAVENS, Thomas N., Moodus, CT 06469 (US)
(74) Representative: Dehns
(86) International application number: PCT/US2013/022829
(87) International publication number: WO 2014/116216

(56) References cited:
- EP-A1- 1 059 419
- GB-A- 2 460 936
- US-A- 5 688 104
- US-A- 5 791 871
- US-A1- 2003 044 277
- US-A1- 2005 169 741
- US-A1- 2006 269 410
- US-B1- 7 690 892
- US-B1- 7 690 892

## Description

### BACKGROUND

This disclosure relates to a gas turbine engine, and more particularly to a component that includes an impingement aperture that can be angled relative to a radial axis of a rib of the component.

Gas turbine engines typically include a compressor section, a combustor section and a turbine section. In general, during operation, air is pressurized in the compressor section and is mixed with fuel and burned in the combustor section to generate hot combustion gases. The hot combustion gases flow through the turbine section which extracts energy from the hot combustion gases to power the compressor section and other gas turbine engine loads.

Due to exposure to hot combustion gases, numerous components of the gas turbine engine may include cooling circuits that circulate cooling airflow to cool various internal and external surfaces of the components during engine operation. Certain portions of components may be difficult to evenly cool notwithstanding the internal cooling circuits. Uneven cooling can result in drastic temperature gradients that may lead to thermal mechanical fatigue.
GB2460936A relates to turbine airfoil cooling. US7690892B1 relates to a turbine airfoil with cooling circuits. EP1059419A1 relates to turbine blade cooling. US2003/044277A1 relates to the cooling circuits of gas turbine blades for an airplane engine.

### SUMMARY

According to a first aspect of the present invention, there is provided a component for a gas turbine engine as claimed in claim 1.

According to a second aspect of the present invention, there is provided a method of providing a component for a gas turbine engine as claimed in claim 9.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a component that can be incorporated into a gas turbine engine.
Figure 3 illustrates a cross-sectional view of a component, such as the component of Figure 2.
Figure 4 illustrates another cross-sectional view of a portion of a component.
Figure 5 illustrates a cross-sectional view through Section A-A of Figure 4.
Figure 6 illustrates a cross-sectional view through Section B-B of Figure 4.
Figure 7 illustrates an exemplary arrangement of impingement slots that can be incorporated into a gas turbine engine component.
Figure 8 illustrates another exemplary arrangement of impingement slots that can be incorporated into a gas turbine engine component.

### DETAILED DESCRIPTION

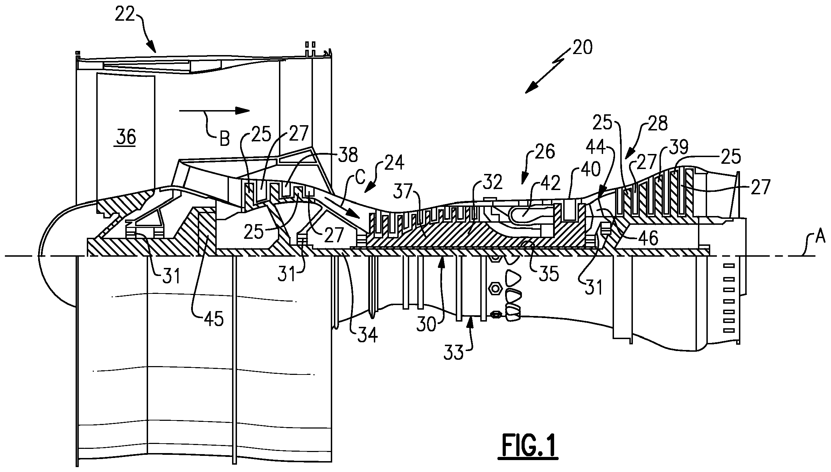

Figure 1 schematically illustrates a gas turbine engine 20. The exemplary gas turbine engine 20 is a two-spool turbofan engine that generally incorporates a fan section 22, a compressor section 24, a combustor section 26 and a turbine section 28. Alternative engines might include an augmenter section (not shown) among other systems for features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only exemplary of one embodiment of a geared architecture engine and that the present disclosure is applicable to other gas turbine engines, including direct drive turbofans.

In this embodiment of the exemplary gas turbine engine 20, a significant amount of thrust is provided by the bypass flow path B due to the high bypass ratio. The fan section 22 of the gas turbine engine 20 is designed for a particular flight condition--typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram °R)/(518.7°R)]^{0.5}, where T represents the ambient temperature in degrees Rankine. The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. Example cooling circuits that include features such as angled impingement slots are discussed below.

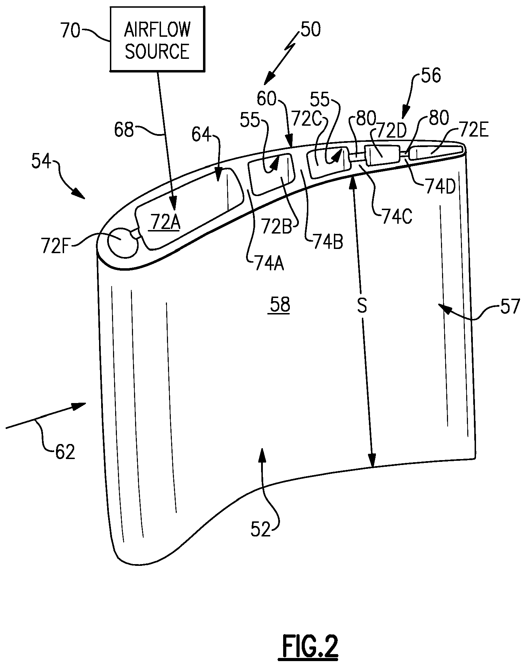

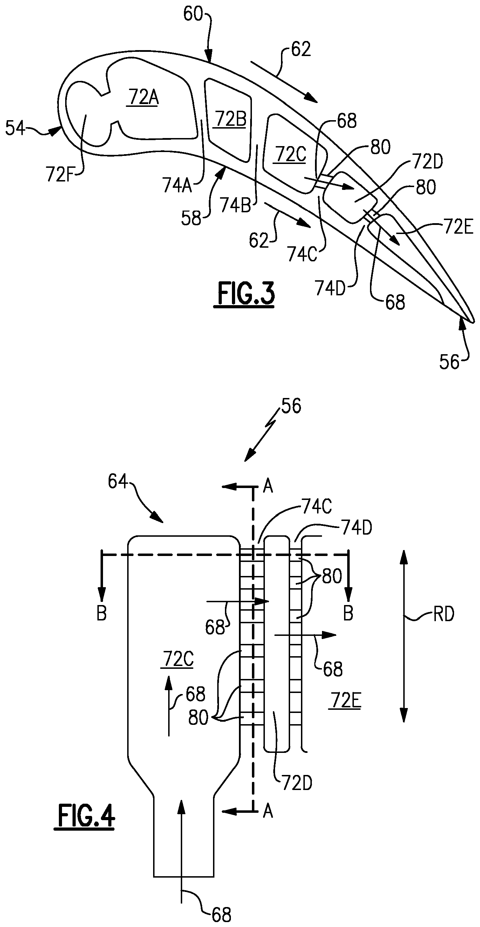

Figures 2 and 3 illustrate a component 50 that can be incorporated into a gas turbine engine, such as the gas turbine engine 20 of Figure 1. The component 50 includes a body portion 52 that axially extends between a leading edge portion 54 and a trailing edge portion 56. The body portion 52 also includes a first wall 58 (e.g., a pressure side wall) and a second wall 60 (e.g., a suction side wall) that are spaced apart from one another and that join at each of the leading edge portion 54 and the trailing edge portion 56.

In this embodiment, the body portion 52 is representative of an airfoil. For example, the body portion 52 could be an airfoil that extends between inner and outer platforms (not shown) where the component 50 is a vane, or could extend from platform and root portions (also not shown) where the component 50 is a blade. Alternatively, the component 50 could be a non-airfoil component, including but not limited to, a blade outer air seal (BOAS), a combustor liner, a turbine exhaust case liner, or any other part that may require dedicated cooling.

A gas path 62 is communicated axially downstream through the gas turbine engine 20 along the core flow path C in a direction that extends from the leading edge portion 54 toward the trailing edge portion 56 of the body portion 52. The gas path 62 represents the communication of core airflow along the core flow path C (see Figure 1). The body portion 52 may extend radially across a span S.

A cooling circuit 64 may be disposed inside of the body portion 52 for cooling the internal and external surfaces of the component 50. For example, the first wall 58 and the second wall 60 include interior surfaces 55 as well as exterior surfaces 57 (i.e., gas path surfaces). The interior surfaces 55 are remote from the gas path 62 and establish portions of the cooling circuit 64, whereas the exterior surfaces 57 are positioned within the gas path 62.

The cooling circuit 64 can also include one or more cavities 72 that may extend radially, axially and/or circumferentially inside of the body portion 52 to establish cooling passages for receiving a cooling airflow 68 to cool the component 50. The cooling airflow 68 may be communicated into one or more of the cavities 72 from an airflow source 70 that is external to the component 50.

The cooling airflow 68 is generally of a lower temperature than the airflow of the gas path 62 that is communicated across the body portion 52. In one particular embodiment, the cooling airflow 68 is a bleed airflow that can be sourced from the compressor section 24 or any other portion of the gas turbine engine 20 that is upstream from the component 50. The cooling airflow 68 can be circulated through the cooling circuit 64 to transfer thermal energy from the component 50 to the cooling airflow 68 thereby cooling the internal and external surfaces of the component 50.

In this embodiment, the exemplary cooling circuit 64 includes a first cavity 72A (i.e., a leading edge cavity that can include an impingement cavity portion 72F), a second cavity 72B (i.e., a first intermediate cavity), a third cavity 72C (i.e., a second intermediate cavity), a fourth cavity 72D (i.e., a third intermediate cavity), and a fifth cavity 72E (i.e., a trailing edge cavity). However, the cooling circuit 64 could alternatively include a greater or fewer number of cavities. The cavities 72A, 72B, 72C, 72D, 72E and 72F can communicate the cooling airflow 68 through the cooling circuit 64, including along a serpentine path, to cool the body portion 52. In other words, the cavities 72A through 72F may be in fluid communication with one another in order to circulate the cooling airflow 68 throughout the cooling circuit 64.

Ribs 74 may extend between the first wall 58 and the second wall 60 of the body portion 52. In this particular embodiment, a first rib 74A is positioned between the first cavity 72A and the second cavity 72B, a second rib 74B is positioned between the second cavity 72B and the third cavity 72C, a third rib 74C is positioned between the third cavity 72C and the fourth cavity 72D and a fourth rib 74D is positioned between the fourth cavity 72D and the fifth cavity 72E.

As discussed in greater detail below, one or more of the ribs 74A, 74B, 74C and 74D can include at least one aperture (i.e., an opening, slot or other elongated opening) 80 that extends through the rib 74. In this embodiment, the ribs 74C and 74D, which are positioned near the trailing edge portion 56, include one or more slots 80. However, other configurations are also contemplated. The cooling airflow 68 can crossover between adjacent cavities 72 through the slots 80 in order to impinge upon portions of the interior surfaces 55 of the first wall 58 and/or second wall 60 of the body portion 52.

Figure 4 illustrates a portion of a cooling circuit 64 that can be disposed inside of the component 50. In this particular embodiment, the portion of the cooling circuit 64 that is disposed within the trailing edge portion 56 of the component 50 is illustrated. Cooling airflow 68 from the cavity 72C can crossover into the adjacent cavity 72D through the slots 80 that extend through the rib 74C. In other words, the cavities 72C and 72D are in fluid communication with one another by virtue of the slots 80. Similarly, the cavity 72D is in fluid communication with the cavity 72E via one or more slots 80 that extend through the rib 74D. The cooling airflow 68 may be expelled from the cooling circuit 64 into the gas path 62 through the cavity 72E (i.e., the trailing edge cavity).

The ribs 74C and 74D of this embodiment extend in the radial direction RD. In one embodiment, the ribs 74C and 74D extend radially across the span S of the body portion 52 (see Figure 2).

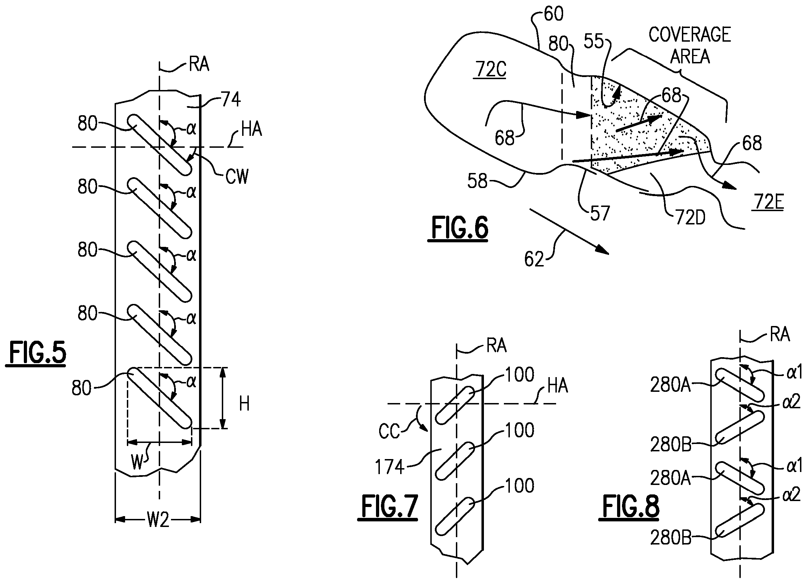

Figure 5 illustrates a rib 74 having an exemplary arrangement of slots 80 that can be incorporated into the body portion 52 of the component 50. The rib 74 extends along a radial axis RA. A plurality of slots 80 may extend through the rib 74; however, the number of slots 80 incorporated into the rib 74 is not intended to be limiting. In this embodiment, the slots 80 are each oriented at an angle α relative to the radial axis RA of the rib 74. The angle α could be between 40 degrees and 50 degrees, in one embodiment. The slots 80 may be oriented in a clockwise direction CW relative to a horizontal axis HA that intersects (and is generally perpendicular to) the radial axis RA. In another embodiment, at least one of the slots 80 is angled at a non-perpendicular angle α relative to the radial axis RA.

The slots 80 may also define an aspect ratio (i.e., the ratio of the width W of the aperture 80 relative to the height H of the aperture 80). In one embodiment, the aspect ratio of each aperture 80 is 5:1. In another embodiment, the aspect ratio of each aperture 80 is between 1:1 and 5:1. The aspect ratio could vary depending on design specific parameters including but not limited the cooling requirement of the component 50. In one non-limiting embodiment, the width W of the aperture 80 is at least 50% of a width W2 of the rib 74.

Referring to Figure 6, the cooling airflow 68 that can be communicated through the slots 80 can impinge upon the interior surface 55 of a cavity 72 (cavity 72D in this example although the slots 80 can be incorporated into any cavity). In this embodiment, the cooling airflow 68 is communicated at a transverse angle relative to the gas path 62. The cooling airflow 68 can be communicated through the slots 80 at a relatively high velocity to maximize heat transfer and provide maximum coverage area for impingement cooling the interior surface 55. For example, by communicating the cooling airflow 68 through the angled slots 80, the cooling airflow 68 may impinge upon an entire axial span of the interior surface 55 of the cavity 72. In this embodiment, the cooling airflow 68 impinges upon the second wall 60 (i.e., the suction side wall) at the trailing edge portion 56 of the component 50.

The cooling airflow 68 can also be communicated to impinge upon other portions of the component 50, such as the first wall 58 (pressure side wall), for example. Figure 7 illustrates another arrangement of slots 180 that can be incorporated into a rib 174 of a body portion 52 of a component 50 for achieving such impingement. The rib 174 extends along a radial axis RA. One or more slots 180 may extend through the rib 174. In this embodiment, the slots 180 are angled relative to the radial axis RA of the rib 174. For example, the slots 180 may be oriented in a counterclockwise direction CC relative to a horizontal axis HA that intersects the radial axis RA. This arrangement may be particularly effective for cooling the interior surfaces 55 of the first wall 58 rather than the second wall 60, for example. The slots 180 may be angled non-perpendicularly relative to the radial axis RA.

Figure 8 illustrates yet another exemplary arrangement of slots 280 that can be incorporated into a rib 274 of a body portion 52 of a component 50. This particular arrangement may be effective for simultaneously cooling both the first wall 58 and the second wall 60. In other words, the slots 280 can be positioned such that cooling airflow 68 can impinge upon different radial portions of the interior surface 55 at a single axial location of the component 50.

In one embodiment, the rib 274 can include a plurality of slots 280 that are angled at different angles relative to the radial axis RA. For example, in this embodiment, a first portion of slots 280A are oriented at a first angle α1 relative to the radial axis RA and a second portion of slots 280B are oriented at a second, different angle α2 relative to the radial axis RA. Cooling airflow 68 communicated through the first portion of slots 280A can impinge on the second wall 60 and cooling airflow 68 communicated through the second portion of slots 280B can impinge on the first wall 58.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A component (50) for a gas turbine engine, comprising:
a body portion (52) that includes a first wall (58) spaced apart from a second wall (60) and a first cavity (72A) and a second cavity (72B), wherein said body portion (52) is an airfoil of one of a blade and a vane, wherein the body portion axially extends between a leading edge portion and a trailing edge portion, the body portion radially extends in a radial direction across a span, and a radial axis RA extending in the radial direction;
at least one rib (74;174;274) that extends along the radial axis (RA) between said first wall (58) and said second wall (60) and is positioned between the first cavity (72A) and the second cavity (72B); and
at least one aperture (90;100;280) that extends through said at least one rib (74;174;274),
wherein said at least one aperture (80;200;280) is in the form of a slot and is angled relative to the radial axis (RA) of said at least one rib (74;174;274);
**characterized in that** a width of said at least one aperture (80;100;280) is at least 50% of a width of said at least one rib (74;174;274); and
wherein said at least one aperture (80;100;180) is angled in a plane defined by the face of the rib at a non-perpendicular angle relative to said radial axis (RA).

2. The component as recited in claim 1, wherein said first wall is a suction side wall and said second wall is a pressure side wall of said airfoil.

3. The component as recited in any preceding claim, comprising a cooling circuit (64) disposed within said body portion (52) and including at least the first cavity (72A) and the second cavity (72B) in fluid communication with said first cavity (72A).

4. The component as recited in any preceding claim, wherein said at least one aperture (80;100;280) is angled in a clockwise direction (CW) from a horizontal axis (HA) that intersects said radial axis (RA).

5. The component as recited in any of claims 1 to 3, wherein said at least one aperture (100) is angled in a counterclockwise direction (CC) from a horizontal axis (HA) that intersects said radial axis (RA).

6. The component as recited in any of claims 1 to 3, comprising a first portion of slots (280A) oriented at a first angle relative to said radial axis (RA) and a second portion of slots (280B) oriented at a second, different angle relative to said radial axis (RA).

7. The component as recited in any preceding claim, wherein said at least one rib (74;174;274) is positioned within a trailing edge portion of said body portion (52).

8. A gas turbine engine (20), comprising:
a compressor section (24);
a combustor section (26) in fluid communication with said compressor section (24);
a turbine section (28) in fluid communication said combustor section (26);
a component (50) as recited in any preceding claim disposed in at least one of said compressor section and said turbine section.

9. A method of providing a component (50) for a gas turbine engine, the component comprising a body portion (52), wherein the body portion (52) is an airfoil of one of a blade and a vane, the method comprising the steps of:
communicating cooling airflow into a cooling circuit (64) disposed inside of the component (50), wherein the cooling circuit includes a first cavity (72A), a second cavity (72B) and a rib (74;174;274) along a radial axis (RA) between the first cavity (72A) and the second cavity (72B); and
communicating the cooling airflow from the first cavity (72A) into the second cavity (72B) through an aperture (80;100;280) that extends through the rib (74;174;274),
wherein the aperture (80;100;280) is in the form of a slot and is angled relative to the radial axis (RA) of the rib (74;174;274);
**characterized in that** a width of said at least one aperture (80;100;280) is at least 50% of a width of said at least one rib (74;174;274);
wherein said at least one aperture (80;100;180) is angled in a plane defined by a face of the rib at a non-perpendicular angle relative to said radial axis (RA).

10. The method as recited in claim 9, wherein the cooling airflow that is communicated through the aperture (80;100;280) impinges upon an interior surface of a wall of the component, and/or wherein the rib (274) includes a first portion of slots (280A) oriented at a first angle relative to the radial axis (RA) and a second portion of slots (280B) oriented at a second, different angle relative to the radial axis (RA) such that the cooling airflow that is communicated through the first portion of slots (280A) impinges on an interior surface of a first wall and the cooling airflow that is communicated through the second portion of slots (280B) impinges upon an interior surface of a second wall of the component.

## Patentansprüche

1. Komponente (50) für ein Gasturbinentriebwerk, umfassend:
einen Gehäuseteil (52), welcher eine erste Wand (58) beinhaltet, welche von einer zweiten Wand (60) und einem ersten Hohlraum (72A) und einem zweiten Hohlraum (72B) beabstandet ist, wobei der Gehäuseteil (52) ein Schaufelprofil von einem von einer Laufschaufel und einer Leitschaufel ist, wobei sich der Gehäuseteil axial zwischen einem Vorderkantenteil und einem Hinterkantenteil erstreckt, wobei sich der Gehäuseteil radial in eine radiale Richtung über eine Spannweite erstreckt, und wobei sich eine radiale Achse RA in die radiale Richtung erstreckt;
mindestens eine Rippe (74; 174; 274), welche sich entlang der radialen Achse (RA) zwischen der ersten Wand (58) und der zweiten Wand (60) erstreckt und zwischen dem ersten Hohlraum (72A) und dem zweiten Hohlraum (72B) positioniert ist; und
mindestens eine Öffnung (90; 100; 280), welche sich durch die mindestens eine Rippe (74; 174; 274) erstreckt,
wobei die mindestens eine Öffnung (80; 200; 280) in der Form eines Schlitzes ist und bezogen auf die radiale Achse (RA) der mindestens einen Rippe (74; 174; 274) abgewinkelt ist;
**dadurch gekennzeichnet, dass** eine Breite der mindestens einen Öffnung (80; 100; 280) mindestens 50 % einer Breite der mindestens einen Rippe (74; 174; 274) ist; und
wobei die mindestens eine Öffnung (80; 100; 180) in einer Ebene abgewinkelt ist, welche durch die Front der Rippe in einem nicht-rechtwinkeligen Winkel bezogen auf die radiale Achse (RA) definiert ist.

2. Komponente nach Anspruch 1, wobei die erste Wand eine Saugseitenwand ist und die zweite Wand ein Druckseitenwand des Schaufelprofils ist.

3. Komponente nach einem der vorstehenden Ansprüche, umfassend einen Kühlkreislauf (64), welcher in dem Gehäuseteil (52) angeordnet ist und mindestens den ersten Hohlraum (72A) und den zweiten Hohlraum (72B) beinhaltet, welcher in Fluidkommunikation mit dem ersten Hohlraum (72A) ist.

4. Komponente nach einem der vorstehenden Ansprüche, wobei die mindestens eine Öffnung (80; 100; 280) im Uhrzeigersinn (CW) von einer horizontalen Achse (HA) abgewinkelt ist, welche die radiale Achse (RA) schneidet.

5. Komponente nach einem der Ansprüche 1 bis 3, wobei die mindestens eine Öffnung (100) im Gegenuhrzeigersinn (CC) von einer horizontalen Achse (HA) abgewinkelt ist, welche die radiale Achse (RA) schneidet.

6. Komponente nach einem der Ansprüche 1 bis 3, umfassend einen ersten Teil von Schlitzen (280A), welche bezogen auf die radiale Achse (RA) in einem ersten Winkel ausgerichtet ist, und einen zweiten Teil von Schlitzen (280B), welche bezogen auf die radiale Achse (RA) in einem zweiten, unterschiedlichen Winkel ausgerichtet sind.

7. Komponente nach einem der vorstehenden Ansprüche, wobei die mindestens eine Rippe (74; 174; 274) in einem Hinterkantenteil des Gehäuseteils (52) positioniert ist.

8. Gasturbinentriebwerk (20), umfassend:
einen Verdichterabschnitt (24);
einen Brennkammerabschnitt (26), welcher in Fluidkommunikation mit dem Verdichterabschnitt (24) ist;
einen Turbinenabschnitt (28), welcher in Fluidkommunikation mit dem Brennkammerabschnitt (26) ist;
eine Komponente (50) nach einem der vorstehenden Ansprüche, welche in mindestens einem des Verdichterabschnitts und des Turbinenabschnitts angeordnet ist.

9. Verfahren zum Bereitstellen einer Komponente (50) für ein Gasturbinentriebwerk, wobei die Komponente einen Gehäuseteil (52) umfasst, wobei der Gehäuseteil (52) ein Schaufelprofil von einem von einer Laufschaufel und einer Leitschaufel ist, wobei das Verfahren die folgenden Schritte umfasst:
Kommunizieren eines Kühlluftstroms in einen Kühlkreislauf (64), welcher in der Komponente (50) angeordnet ist, wobei der Kühlkreislauf einen ersten Hohlraum (72A), einen zweiten Hohlraum (72B) und eine Rippe (74; 174; 274) entlang einer radialen Achse (RA) zwischen dem ersten Hohlraum (72A) und dem zweiten Hohlraum (72B) beinhaltet; und
Kommunizieren des Kühlluftstroms von dem ersten Hohlraum (72A) in den zweiten Hohlraum (72B) durch eine Öffnung (80; 100; 280), welche sich durch die Rippe (74; 174; 274) erstreckt,
wobei die Öffnung (80; 100; 280) in der Form eines Schlitzes ist und bezogen auf die radiale Achse (RA) der Rippe (74; 174; 274) abgewinkelt ist;
**dadurch gekennzeichnet, dass** eine Breite der mindestens einen Öffnung (80; 100; 280) mindestens 50 % einer Breite der mindestens einen Rippe (74; 174; 274) ist;
wobei die mindestens eine Öffnung (80; 100; 180) in einer Ebene abgewinkelt ist, welche durch eine Front der Rippe in einem nicht-perpendikularen Winkel bezogen auf die radiale Achse (RA) definiert ist.

10. Verfahren nach Anspruch 9, wobei der Kühlluftstrom, welcher durch die Öffnung (80; 100; 280) kommuniziert wird, auf eine Innenfläche einer Wand der Komponente aufprallt, und/oder wobei die Rippe (274) einen ersten Teil von Schlitzen (280A), welche bezogen auf die radiale Achse (RA) in einem ersten Winkel ausgerichtet sind, und einen zweiten Teil von Schlitzen (280B), welche bezogen auf die radiale Achse (RA) in einem zweiten, unterschiedlichen Winkel ausgerichtet sind, so dass der Kühlluftstrom, welcher durch den ersten Teil von Schlitzen (280A) kommuniziert wird, auf eine innere Fläche einer ersten Wand aufprallt und der Kühlluftstrom, welcher durch den zweiten Teil von Schlitzen (280B) kommuniziert wird, auf eine innere Fläche einer zweiten Wand der Komponente aufprallt.

## Revendications

1. Composant (50) pour un moteur à turbine à gaz, comprenant :
une partie de corps (52) qui comporte une première paroi (58) espacée d'une seconde paroi (60) et une première cavité (72A) et une seconde cavité (72B), dans lequel ladite partie de corps (52) est un profil aérodynamique de l'une d'une aube et d'une pale, dans lequel la partie de corps s'étend axialement entre une partie de bord d'attaque et une partie de bord de fuite, la partie de corps s'étend radialement dans une direction radiale sur une envergure, et un axe radial RA s'étendant dans la direction radiale ;
au moins une nervure (74 ; 174 ; 274) qui s'étend le long de l'axe radial (RA) entre ladite première paroi (58) et ladite seconde paroi (60) et est positionnée entre la première cavité (72A) et la seconde cavité (72B) ; et
au moins une ouverture (90 ; 100 ; 280) qui s'étend à travers ladite au moins une nervure (74 ; 174 ; 274),
dans lequel ladite au moins une ouverture (80 ; 200 ; 280) a la forme d'une fente et est inclinée par rapport à l'axe radial (RA) de ladite au moins une nervure (74 ; 174 ; 274) ;
**caractérisé en ce que**
une largeur de ladite au moins une ouverture (80 ; 100 ; 280) est d'au moins 50 % d'une largeur de ladite au moins une nervure (74 ; 174 ; 274) ; et
dans lequel ladite au moins une ouverture (80 ; 100 ; 180) est inclinée dans un plan défini par la face de la nervure à un angle non perpendiculaire par rapport audit axe radial (RA).

2. Composant selon la revendication 1, dans lequel ladite première paroi est une paroi d'extrados et ladite seconde paroi est une paroi d'intrados dudit profil aérodynamique.

3. Composant selon une quelconque revendication précédente, comprenant un circuit de refroidissement (64) disposé à l'intérieur de ladite partie de corps (52) et comportant au moins la première cavité (72A) et la seconde cavité (72B) en communication fluidique avec ladite première cavité (72A).

4. Composant selon une quelconque revendication précédente, dans lequel ladite au moins une ouverture (80 ; 100 ; 280) est inclinée dans le sens des aiguilles d'une montre (CW) à partir d'un axe horizontal (HA) qui coupe ledit axe radial (RA).

5. Composant selon l'une quelconque des revendications 1 à 3, dans lequel ladite au moins une ouverture (100) est inclinée dans le sens inverse des aiguilles d'une montre (CC) à partir d'un axe horizontal (HA) qui coupe ledit axe radial (RA).

6. Composant selon l'une quelconque des revendications 1 à 3, comprenant une première partie de fentes (280A) orientée selon un premier angle par rapport audit axe radial (RA) et une seconde partie de fentes (280B) orientée selon un second angle différent par rapport audit axe radial (RA).

7. Composant selon une quelconque revendication précédente, dans lequel ladite au moins une nervure (74 ; 174 ; 274) est positionnée à l'intérieur d'une partie de bord de fuite de ladite partie de corps (52).

8. Moteur à turbine à gaz (20), comprenant :
une section de compresseur (24) ;
une section de chambre de combustion (26) en communication fluidique avec ladite section de compresseur (24) ;
une section de turbine (28) en communication fluidique avec ladite section de chambre de combustion (26) ;
un composant (50) selon une quelconque revendication précédente disposé dans au moins l'une de ladite section de compresseur et de ladite section de turbine.

9. Procédé de fourniture d'un composant (50) pour un moteur à turbine à gaz, le composant comprenant une partie de corps (52), dans lequel la partie de corps (52) est un profil aérodynamique d'une aube et d'une pale, le procédé comprenant les étapes de :
communication d'un flux d'air de refroidissement dans un circuit de refroidissement (64) disposé à l'intérieur du composant (50), dans lequel le circuit de refroidissement comporte une première cavité (72A), une seconde cavité (72B) et une nervure (74 ; 174 ; 274) le long d'un axe radial (RA) entre la première cavité (72A) et la seconde cavité (72B) ; et
communication du flux d'air de refroidissement de la première cavité (72A) à la seconde cavité (72B) par une ouverture (80 ; 100 ; 280) qui s'étend à travers la nervure (74 ; 174 ; 274),
dans lequel l'ouverture (80 ; 100 ; 280) a la forme d'une fente et est inclinée par rapport à l'axe radial (RA) de la nervure (74 ; 174 ; 274) ;
**caractérisé en ce que**
une largeur de ladite au moins une ouverture (80 ; 100 ; 280) est d'au moins 50 % d'une largeur de ladite au moins une nervure (74 ; 174 ; 274) ;
dans lequel ladite au moins une ouverture (80 ; 100 ; 180) est inclinée dans un plan défini par une face de la nervure à un angle non perpendiculaire par rapport audit axe radial (RA).

10. Procédé selon la revendication 9, dans lequel le flux d'air de refroidissement qui est communiqué par l'ouverture (80 ; 100 ; 280) heurte une surface intérieure d'une paroi du composant, et/ou dans lequel la nervure (274) comporte une première partie de fentes (280A) orientée selon un premier angle par rapport à l'axe radial (RA) et une seconde partie de fentes (280B) orientée selon un second angle différent par rapport à l'axe radial (RA) de sorte que le flux d'air de refroidissement qui est communiqué par la première partie de fentes (280A) heurte une surface intérieure d'une première paroi et le flux d'air de refroidissement qui est communiqué par la seconde partie de fentes (280B) heurte une surface intérieure d'une seconde paroi du composant.
